# EUROPÄISCHE PATENTSCHRIFT

(11) **EP 0 937 877 B1**
(45) Veröffentlichungstag und Bekanntmachung des Hinweises auf die Patenterteilung: **29.09.1999**
(21) Anmeldenummer: 98100278.5
(22) Anmeldetag: 09.01.1998
(51) Int. Cl.: F02D 41/02, F01N 7/00, F01N 3/08

(54) **Leckageueberwachung bei einer Abgasebehandlungsanordnung eines Verbrennungsmotors**
Monitoring of leakage in an exhaust gas treatment device of a combustion engine
Surveillance de fuite dans un dispositif de traitement de gaz d'échappement d'un moteur à combustion

(43) Veröffentlichungstag der Anmeldung: 25.08.1999
(73) Patentinhaber: Ford Global Technologies, Inc., Dearborn, Michigan 48126 (US)
(72) Erfinder: Dickers, Guido, 41068 Moenchengladbach (DE); Himmelsbach, Johann, 51789 Lindlar (DE); Grieser, Klemens, 40764 Langenfeld (DE); Phlips, Patrick, 50858 Köln (DE)
(74) Vertreter: Messulam, Alec Moses

(56) Entgegenhaltungen:
- EP-A- 0 627 548
- EP-A- 0 719 931
- US-A- 5 158 063
- US-A- 5 351 526
- PATENT ABSTRACTS OF JAPAN vol. 007, no. 133 (M-221), 10.Juni 1983 & JP 58 048743 A (TOYOTA JIDOSHA KOGYO KK;OTHERS: 01), 22.März 1983,
- PATENT ABSTRACTS OF JAPAN vol. 012, no. 336 (M-739), 9.September 1988 & JP 63 097844 A (TOYOTA MOTOR CORP), 28.April 1988,

## Beschreibung

Die Erfindung betrifft eine Leckageüberwachung bei einem Verbrennungsmotor mit einer Abgasbehandlungsanordnung, einer elektronischen Motorsteuerung mit einer Einrichtung zur Festlegung des dem Verbrennungsmotor zuzuführenden Luft-/Kraftstoffverhältnisses Lambda abhängig von verschiedenen Motorbetriebsparametern, wobei der Einstellbereich für Lambda auch Werte größer als 1,0 umfaßt, einer Einrichtung zur Einstellung des von der Motorsteuerung vorgegebenen Luft-/Kraftstoffverhältnisses sowie einer Einrichtung zur näherungsweisen Bestimmung der Temperatur der Abgasbehandlungsanordnung.

Die Abgasbehandlungsanordnung weist einen konventionellen Dreiwegekatalysator auf. Zusätzlich ist eine Stickoxidfalle (NOₓ-Trap) vorgesehen. Die Stickoxidfalle verringert insbesondere die bei einem kraftstoffsparenden Magerbetrieb des Motors auftretenden Stickoxidemissionen.

Sowohl bei Dreiwegekatalysatoren als auch bei Stickoxidfallen besteht ein bekanntes Problem darin, daß bestimmte, vorgegebene Grenztemperaturen der aktiven Substanzen nicht überschritten werden dürfen, um eine Beschädigung bzw. vorschnelle Alterung zu vermeiden. Es ist heute vielfach üblich, die Stickoxidfalle relativ nahe am Motor anzuordnen, um ein schnelles Aufheizen derselben nach einem Motorkaltstart zu erreichen. Bei dieser Anordnung kann die Stickoxidfalle - vor allem bei einem längeren Motorbetrieb im Vollastbereich - Temperaturen erreichen, die im Bereich der Beschädigungsgrenztemperatur liegen.

Es ist bekannt, Maßnahmen zur Senkung der Abgastemperatur (z.B. künstliche Gemischanreicherung) zu treffen, wenn die Beschädigungsgrenztemperatur überschritten zu werden droht.

Es wird jedoch bislang bei der Steuerung des Verbrennungsmotors nicht beachtet, daß die Stickoxidfalle dann besonders in Mitleidenschaft gezogen werden kann, wenn zwischen Dreiwegekatalysator und Stickoxidfalle ein Leck auftritt und dadurch vermehrt Sauerstoff in die Stickoxidfalle gelangt, der mit unverbrannten Kohlenwasserstoffen oder Kohlenmonoxid zu einer verstärkten Erwärmung der Stickoxidfalle und damit zum Überschreiten der Beschädigungsgrenztemperatur führen kann. Dies kann besonders bei angereichertem Gemisch (Lambda kleiner als 1) der Fall sein.

Die Aufgabe der vorliegenden Erfindung liegt darin, ein Verfahren der eingangs genannten Art zu schaffen, mit dem eine Beschädigung bzw. vorschnelle Alterung der Stickoxidfalle vermieden werden kann.

Diese Aufgabe wird erfindungsgemäß dadurch gelöst, daß bei Überschreiten einer vorgegebenen Grenztemperatur der Stickoxidfalle ausschließlich ein Luft-/Kraftstoffgemisch mit Lambda näherungsweise gleich oder etwas größer als 1,0 eingestellt wird.

Es wird somit erfindungsgemäß bei Auftreten eines Lecks und Überschreiten der vorgegebenen Grenztemperatur verhindert, daß der Motor mit einem höheren Kraftstoffanteil, als es einem stöchiometrischen Luft-/Kraftstoffverhältnis entspricht, betrieben (Lambda = 1,0 bei Normierung auf den stöchiometrischen Wert) wird.

Die Einstellung auf stöchiometrisches bzw. leicht mageres Gemisch erfolgt unter Abschaltung der sonst erfolgenden Lambda-Regelung. Dadurch wird vermieden, daß durch die Leckage verfälschte Werte der Lambda-Sonde für die Regelung benutzt werden.

Die Überschreitung der Grenztemperatur wird bevorzugt mit der Ausgangstemperatur T_{A} überwacht. Besteht die Stickoxidfalle aus mehreren Abschnitten, kann die Ausgangstemperatur auch zwischen den Abschnitten gemessen werden. Es können aber auch mehrere Temperaturen, insbesondere zwei Temperaturen an der Stickoxidfalle (Eingangstemperatur T_{E} und Ausgangstemperatur T_{A} bzw. durch deren Differenz) überwacht werden.

Die vorgegebene Grenztemperatur kann vorzugsweise 750-850 °C betragen.
Die vorgegebene Temperaturdifferenz kann vorzugsweise so gewählt werden, daß diese etwa 50 bis 150 °C liegt.

Insbesondere im Vollastbetrieb, in dem ein fetteres Gemisch eingestellt wird, um das angeforderte Drehmoment bereitzustellen, kann die Zufuhr von Falschluft durch ein Leck schnell zur Erhöhung der Stickoxidfallentemperatur führen. Das Rohabgas enthält in dieser Situation auch unverbrannten Kraftstoff.

Der unverbrannte Kraftstoff gelangt in die Stickoxidfalle. Dort findet eine Nachverbrennung statt. Da diese Verbrennung zeitlich und örtlich stark begrenzt ist, kann dies zu einer lokalen Überhitzung der aktiven Substanzen in der Stickoxidfalle führen.

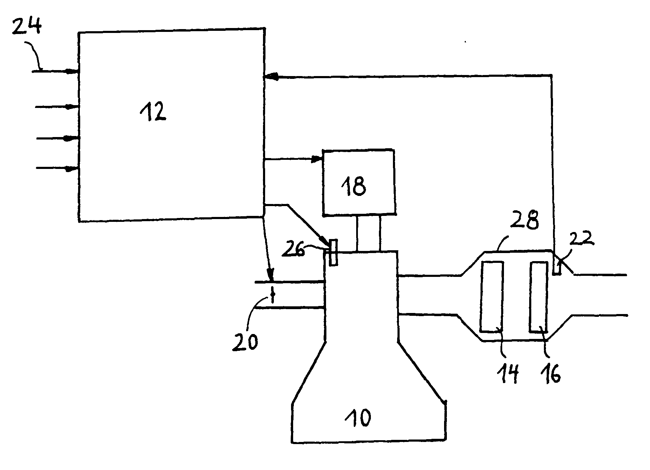

Die Erfindung wird nachfolgend anhand der Zeichnung beispielhaft näher erläutert.

Der Mehrzylinderverbrennungsmotor 10 wird von einer elektronischen Motorsteuerung 12, die eine Vielzahl von Eingangssignalen 24, wie z.B. die aktuelle Motordrehzahl oder die aktuelle Stellung des Fahrergaspedals erhält, gesteuert. Die Motorsteuerung führt Algorithmen zur Ansteuerung einer elektronischen Drosselklappe 20, einer Zündanlage 18 und einer Einspritzanlage 26 aus. Über die elektronische Drosselklappe 20 und die Einspritzanlage 18 kann das Luft-/Kraftstoffverhältnis Lambda des den Zylindern zugeführten Gemisches in weiten Grenzen verändert werden, insbesondere kann unter bestimmten Betriebsbedingungen ein mageres Luft-/Kraftstoffverhältnis eingestellt werden (z.B. Lambda=1,6) oder die Kraftstoffzufuhr völlig unterbunden werden (Schiebebetrieb). Die Motorabgase werden einer Abgasbehandlungsanordnung 28 zugeführt. Diese kann z.B. aus einem Dreiwegekatalysator 14 und einer Stickoxidfalle 16 bestehen. Durch einen Temperatursensor 22 wird die Abgastemperatur an der Stickoxidfalle 16 gemessen.

Im Falle des Überschreitens eines auf die Temperatur der Stickoxidfalle bezogenen Höchstwertes bei Vollastbetrieb mit leicht fettem Luft/Kraftstoff-verhältnis kann eine Warnlampe für den Fahrer eingeschaltet und/oder ein festgelegter Fehlercode in der Motorsteuerung abgespeichert werden.

## Patentansprüche

1. Leckageüberwachung bei einer Abgasnachbehandlungsanordnung eines für Magerbetrieb in der Teillast ausgelegten Verbrennungsmotors mit einem Drei-Wege-Katalysator und einer nachgeschalteten Stickoxidfalle, bei der wenigstens eine Temperatur der Stickoxidfalle bestimmt wird, dadurch gekennzeichnet, daß im Falle des Überschreitens eines auf die Temperatur der Stickoxidfalle bezogenen Höchstwertes bei Vollastbetrieb mit leicht fettem Luft/Kraftstoffverhältnis auf gesteuertes stöchiometrisches oder leicht mageres Luft/Kraftstoffverhältnis umgestellt wird.

2. Leckageüberwachung nach Anspruch 1, dadurch gekennzeichnet, daß als auf die Temperatur der Stickoxidfalle bezogener Höchstwert eine Ausgangstemperatur benutzt wird.

3. Leckageüberwachung nach Anspruch 1, dadurch gekennzeichnet, daß als auf die Temperatur der Stickoxidfalle bezogener Höchstwert je eine Abgastemperatur benutzt wird, welche unmittelbar vor und hinter der Stickoxiffalle gemessen wird.

4. Leckageüberwachung nach einem der vorhergehenden Ansprüche, dadurch gekennzeichnet, daß im Falle des Überschreitens eines auf die Temperatur der Stickoxidfalle bezogenen Höchstwertes bei Vollastbetrieb mit leicht fettem Luft/Kraftstoffverhältnis eine Warnlampe für den Fahrer eingeschaltet wird.

5. Leckageüberwachung nach einem der vorhergehenden Ansprüche, dadurch gekennzeichnet, daß im Falle des Überschreitens eines auf die Temperatur der Stickoxidfalle bezogenen Höchstwertes bei Vollastbetrieb mit leicht fettem Luft/Kraftstoffverhältnis ein festgelegter Fehlercode in der Motorsteuerung abgespeichert wird.

## Claims

1. Method of monitoring leaks in an exhaust treatment system of an internal combustion engine designed for lean mixture operation under part load and having a three-way catalytic converter followed by a nitrogen oxide trap, wherein at least one temperature of the nitrogen oxide trap is determined, characterised in that in the event of a maximum value related to the temperature of the nitrogen oxide trap being exceeded under full load operation with a slightly rich air/fuel ratio, the mixture is readjusted to a controlled stoichiometric or slightly lean air/fuel ratio.

2. Leak monitoring method according to claim 1, characterised in that an outlet temperature is used as the maximum value related to the temperature of the nitrogen oxide trap.

3. Leak monitoring method according to claim 1, characterised in that exhaust gas temperatures measured immediately before and after the nitrogen oxide trap are used as the maximum value related to the temperature of the nitrogen oxide trap.

4. Leak monitoring method according to any preceding claim, characterised in that in the event of a maximum value related to the temperature of the nitrogen oxide trap being exceeded under full load operation with a slightly rich air/fuel ratio a warning lamp for the driver is switched on.

5. Leak monitoring means according to any preceding claim, characterised in that in the event of a maximum value related to the temperature of the nitrogen oxide trap being exceeded under full load operation with a slightly rich air/fuel ratio a fixed error code is stored in the engine control unit.

## Revendications

1. Procédé de surveillance de fuites dans un dispositif de traitement des gaz d'échappement d'un moteur à combustion conçu pour un fonctionnement maigre en charge partielle, dispositif qui comprend un catalyseur trois voies suivi d'un piège d'oxyde d'azote, au moins une température du piège d'oxyde d'azote étant déterminée, caractérisé en ce que, en cas de dépassement d'une valeur maximale concernant la température du piège d'oxyde d'azote, en fonctionnement à pleine charge avec un rapport air/carburant légèrement gras, on passe à un rapport air/carburant commandé stoechiométrique ou légèrement maigre.

2. Procédé de surveillance de fuites selon la revendication 1, caractérisé en ce que, comme valeur maximale concernant la température du piège d'oxyde d'azote, on utilise une température de sortie.

3. Procédé de surveillance de fuites selon la revendication 1, caractérisé en ce que, comme valeur maximale concernant la température du catalyseur, on utilise des températures respectives des gaz d'échappement qui sont mesurées juste avant et juste après le piège d'oxyde d'azote.

4. Procédé de surveillance de fuites selon une des revendications précédentes, caractérisé en ce que, en cas de dépassement d'une valeur maximale concernant la température du piège d'oxyde d'azote, en fonctionnement à pleine charge avec un rapport air/carburant légèrement gras, un témoin lumineux pour le conducteur est enclenché.

5. Procédé de surveillance de fuites selon une des revendications précédentes, caractérisé en ce que, en cas de dépassement d'une valeur maximale concernant la température du piège d'oxyde d'azote, en fonctionnement à pleine charge avec un rapport air/carburant légèrement gras, un code d'erreur donné est mémorisé dans la gestion moteur.
